# EUROPEAN PATENT SPECIFICATION

(11) **EP 0 716 943 B1**
(45) Date of publication and mention of the grant of the patent: **22.03.2000**
(21) Application number: 95309063.6
(22) Date of filing: 13.12.1995
(51) Int. Cl.: B60G 15/07, B60G 13/00

(54) **Knuckle bracket**
Befestigungsbügel
Bride de fixation

(30) Priority: 14.12.1994 JP 33308894; 31.08.1995 JP 24674095
(43) Date of publication of application: 19.06.1996
(73) Proprietor: Kayaba Kogyo Kabushiki Kaisha, Tokyo (JP)
(72) Inventor: Nogami, Shusaku, Minokamo-shi, Gifu (JP)
(74) Representative: Price, Paul Anthony King

(56) References cited:
- EP-A- 0 476 833
- DE-A- 4 131 323
- FR-A- 2 472 487
- GB-A- 2 026 405
- GB-A- 2 050 968
- PATENT ABSTRACTS OF JAPAN vol. 015 no. 174 (M-1109) ,2 May 1991 & JP-A-03 037441 (SHOWA MFG CO LTD) 18 February 1991,

## Description

The present invention relates to a knuckle bracket which is interposed between a vehicle body and a wheel of a vehicle and which is used to mount a strut type shock absorber for absorbing energy such as vibrations from a road surface.

The strut type shock absorber comprises an outer shell and a shock absorber inserted into the outer shell, and a lower portion of the outer shell is connected to a wheel of the vehicle by the knuckle bracket.

Known knuckle brackets of this kind are disclosed, for example, in Japanese Patent Application Laid-Open No. 58-63506, Japanese Utility Model Publication No. 61-13790, U.S. Patent No. 4,491,339 and Japanese Patent Application Laid-open No. 56-160442. Such a known knuckle bracket is shown in Fig.6 and Fig. 7 .

This knuckle bracket A comprises a curved embracing portion for embracing an outer tube or an outer shell 3, a pair of holding portions 5, 5 extending from the embracing portion 4, and mounting holes 1, 2 provided through the holding portions 5, 5. The embracing portion 4 and the holding portions 5, 5 are formed to have a generally U-shaped section in plan view.

The lower portion of the outer shell 3 into which the shock absorber is inserted is embraced by the embracing portion 4, and the holding portions 5, 5 are fastened by bolts inserted into bolt holes or the mounting holes 1, 2.

After the outer shell 3 has been mounted in the knuckle bracket A as described above, upper and lower end peripheral edges a of the embracing portion 4 and inner peripheral portions b of supports 6, 6 provided above the holding portions 5, 5 are secured to the outer surface of the outer shell 3 by welding.

However, the above-described conventional knuckle bracket A has the following disadvantages:
**1.** Since the knuckle bracket A has the U-shaped section, the embracing force achieved by fastening together the holding portions 5, 5 is so weak that one or both of the peripheral edges a of the embracing portion 4 and the inner peripheral portions b of the support 6 have to be welded. This results in complicated manufacturing and high cost. Furthermore, the welding may thermally affect a portion of the outer shell 3 which is in use subjected to the maximum bending moment and thus there may be a reduction in the fatigue strength of the outer shell.
**2.** The embracing portion 4 is bent into a curved configuration so as to fit around the outer peripheral portion of the outer shell 3. When the bending operation is inaccurate, the mounting holes 1, 1 and 2, 2 formed in the holding portions 5, 5 are not opposite each other. Accordingly, it is necessary either to make the mounting holes larger so that the mounting holes 1, 1 and 2, 2 are always opposite each other or to perform boring work so that the mounting holes 1, 1 and 2, 2 are opposite each other after welding, which complicates the manufacturing.

JP-A-03-037441 discloses the preamble of claim 1.

According to the present invention, there is provided a knuckle bracket comprising:
a bracket body for receiving an outer shell of a shock absorber, wherein a press-fit fixed-diameter hole for the press-fitting therein of a lower portion of the outer shell is formed in an upper end of the bracket body; and
a pair of holding portions for holding therebetween a knuckle of a wheel hub, the holding portions projecting laterally from the bracket body and having opposed mounting holes;
characterized in that:
the bracket body comprises a horizontal support and a pair of curved embracing portions bent to project downwardly from opposite ends of the support;
the holding portions project from sides of the embracing portions; and
the press-fit hole is coaxial with the centre of curvature of the inner peripheries of the embracing portions and is formed in a central portion of the support.

A tubular guide may extend the press-fit hole and project from an upper or lower surface of the bracket body. For example, the tubular guide may comprise an upwardly or downwardly-bent lip of the press-fit hole.

In use, a lower portion of the outer shell of the shock absorber is press fitted into the press-fit hole, and the outer shell and the knuckle bracket can be connected merely by welding the base of the outer shell to the base of the bracket body. Because the outer shell is press-fitted into the press-fit hole, it is not necessary to weld the edge of the press-fit hole to the outer shell.

Preferred embodiments of the present invention will now be described with reference to the accompanying drawings, in which:-
Fig. 1 is a perspective view of a knuckle bracket according to an embodiment of the present invention;
Fig. 2 is a cross sectional bottom view taken on line A-A of the knuckle bracket shown in Fig. 1;
Fig. 3 is likewise a perspective view of a knuckle bracket according to another embodiment of the present invention;
Fig. 4 is likewise a perspective view of a knuckle bracket according to still another embodiment of the present invention;
Fig. 5 is a longitudinal fragmentary side view taken on line C-C of Fig. 4;

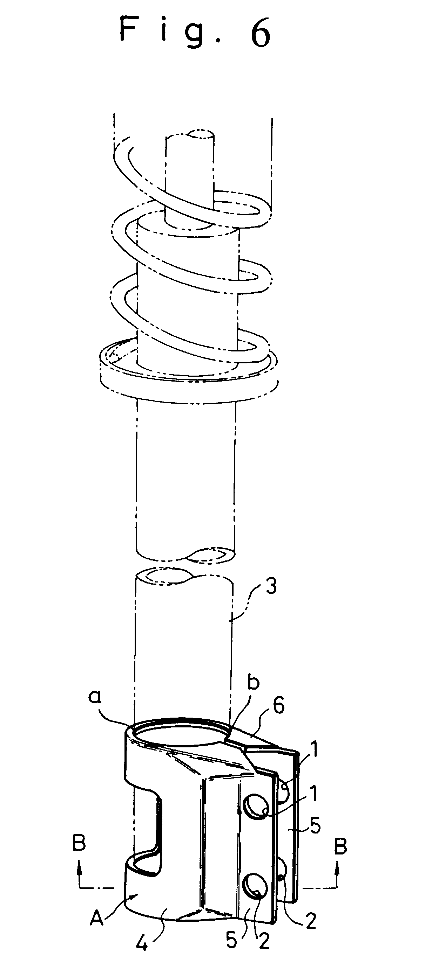

Fig.6 is a perspective view of a conventional knuckle bracket; and
Fig.7 is a cross-sectional bottom view taken on line B-B of Fig.6.

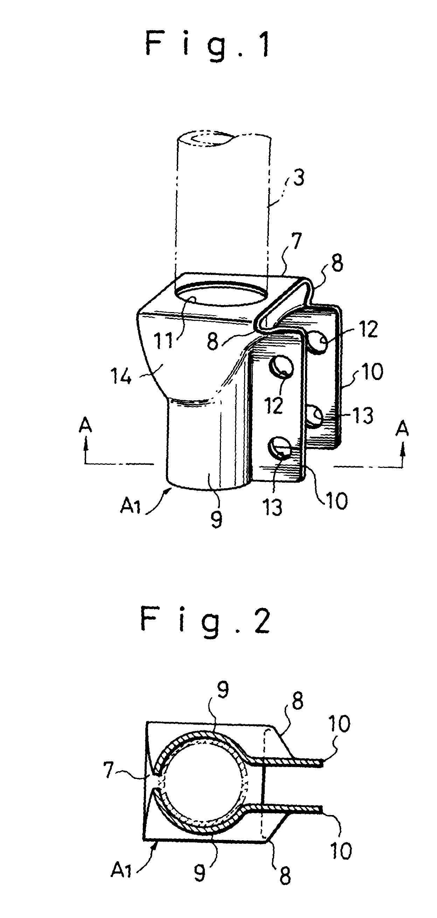

The knuckle bracket shown in Figs. 1 and 2 comprises a bracket body A1 having a horizontal support 7 and a pair of curved embracing portions 9, 9 hung down from left and right sides of the support 7 through bent portions 8, 8 and is further provided with a pair of parallel holding portions 10, 10 vertically provided on the forward side of each of the embracing portions 9, 9, a longitudinal press-fit hole 11 positioned on the same axis as that of an inner periphery of each of the embracing portions 9, 9, and two upper and lower lateral mounting holes 12, 12 and 13, 13 formed in each of the holding portions 10, 10.

The bent portions 8, 8 and the embracing portions 9, 9 may be directly connected to each other. However, preferably, outwardly distorted connecting portions 14 are provided in between, and the bent portions 8, 8 and the connecting portions 14, 14 are used as reinforcing ribs.

While the longitudinal press-fit hole 11 may be formed by boring a hold through a central portion of the support 7, it is to be noted that a tubular guide in communication with the longitudinal hole may project from an upper surface or a lower surface of the support. Further, the tubular guide and the longitudinal hole may be formed by bending the central portion of the support upward or downward.

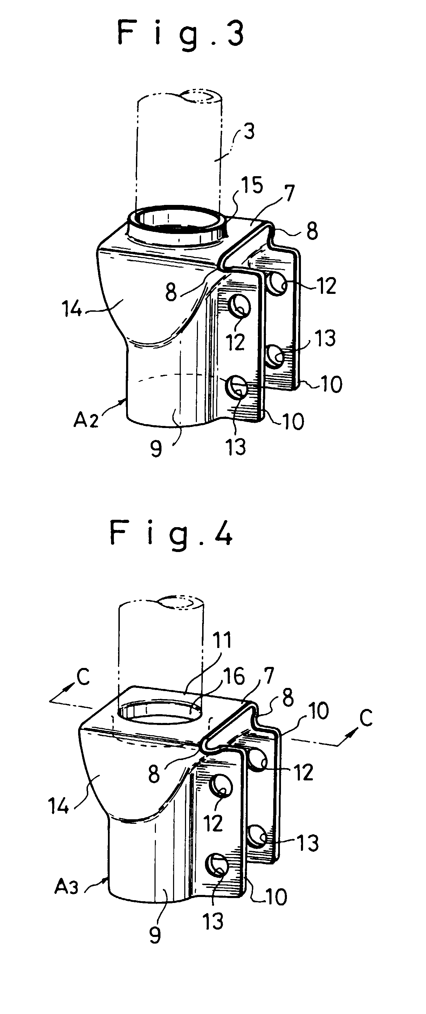

As shown in Fig. 3 or 4, a bracket body A2 or A3 is generally similar to the bracket body A1 of Fig. 1, but a tubular guide 15 or 16 having a suitable length is provided immediately next to the longitudinal press-fit hole 11 and projects so that, when the outer shell 3 is press-fitted into the tubular guide 15 or 16 and the press-fit hole 11, the contact area therebetween is increased so as to provide a good press-fit.

In the embodiment shown in Fig. 3, the tubular guide 15 projects from the upper side of the support 7. In the embodiment shown in Fig. 4, the tubular guide 16 projects from the lower side of the support 7. The tubular guide 15 or 16, which is formed from a separate member, is fixed to the support 7. Alternatively, the circumferential periphery of a hole which is formed in the centre of the support 7 may be bent upward to form the guide 15 and the hole 11, or bent downward to form the guide 16 and the hole 11.

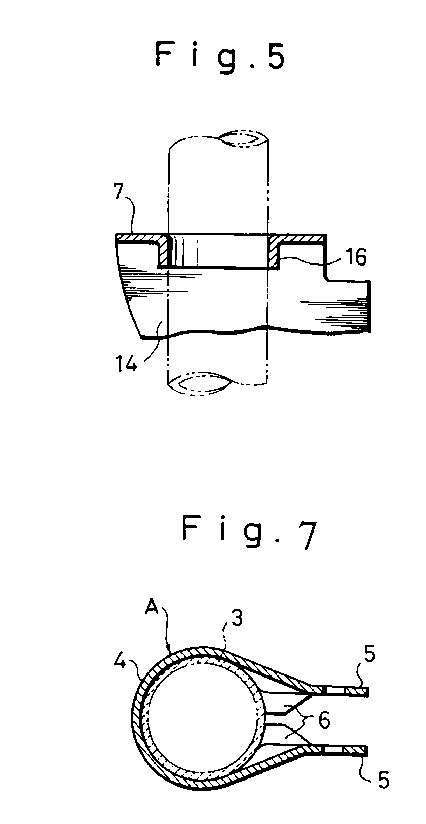

In the knuckle brackets according to the embodiments shown in Figs. 1 to 5, the outer shell and the knuckle bracket can be connected merely by press-fitting the outer shell 3 downward into the longitudinal press-fit hole 11, or into the tubular guide 15 or 16 and the longitudinal press-fit hole 11, and then welding the lower portion of the outer shell 3 to the lower portion of the embracing portion 9.

Therefore, it is not necessary to weld the portion adjacent to the longitudinal hole 11, i.e. the portion of the outer shell 3 which in use receives the maximum bending moment.

Further, a knuckle on the wheel hub is inserted between the holding portions 10, 10, bolts are then inserted between the mounting holes 12, 12, 13, 13 and the holding portions 10, 10 are fastened by bolts. Then, the inner peripheries of the embracing portions 9, 9 come into close contact with the outer periphery of the outer shell 3 whereby the outer shell 3 and the knuckle bracket A1, A2 or A3 are more firmly connected together.

While the rear portions of the embracing portions 9, 9 may be integrally connected, it is to be noted that a suitable spacing may be provided as shown in Fig. 2.

The illustrated embodiments have the following characteristics:
1. It is not necessary to weld the portion of the outer shell which in use receives the maximum bending moment. Since the above-described portion need not be welded, the workability is improved and the cost can be reduced. Moreover, it is possible to overcome the problem of the fatigue strength of the outer shell being lowered due to the thermal influence during welding.
2. Since there are provided the embracing portions in addition to the holding portions, the embracing portions may be fastened so as to more rigidly hold the outer shell in cooperation with the press-fit hole.
3. Since there are provided the bent portions, the rigidity and the strength due to a ribbing effect are increased.
4. Since the horizontal support, the bent portions and the embracing portions are formed to be generally U-shaped as viewed from above, the bending angles and the amount of bending of the bent portions and the embracing portions can be easily set and stabilized. It is therefore possible to accurately locate the mounting holes of the holding portions.
5. In some embodiments, since there is a tubular guide extending from the press-fit hole, the contact area with the outer shell is increased to improve the retaining force. Since the outer shell is guided in a longitudinal direction, the press-fit operation also becomes facilitated.

## Claims

1. A knuckle bracket comprising:
a bracket body (A1, A2, A3) for receiving an outer shell (3) of a shock absorber, wherein a press-fit fixed-diameter hole (11) for the press-fitting therein of a lower portion of the outer shell is formed in an upper end of the bracket body; and
a pair of holding portions (10) for holding therebetween a knuckle of a wheel hub, the holding portions projecting laterally from the bracket body and having opposed mounting holes (12, 13);
characterized in that:
the bracket body (A1, A2, A3) comprises a horizontal support (7) and a pair of curved embracing portions (9) bent to project downwardly from opposite ends of the support;
the holding portions (10) project from sides of the embracing portions (9); and
the press-fit hole (11) is coaxial with the centre of curvature of the inner peripheries of the embracing portions (9) and is formed in a central portion of the support (7).

2. A knuckle bracket according to claim 1, wherein a tubular guide (15, 16) extends the press-fit hole (11) and projects from an upper or lower surface of the bracket body (A2, A3).

3. A knuckle bracket according to claim 2, wherein the tubular guide (15, 16) comprises an upwardly or downwardly-bent lip of the press-fit hole (11).

4. A knuckle bracket in combination with a shock absorber, wherein the knuckle bracket is in accordance with any one of claims 1 to 3 and the shock absorber has an outer shell (3) a lower portion of which is press-fitted in the press-fit hole (11) of the bracket body (A1, A2, A3).

5. The knuckle bracket and shock absorber combination of claim 4, wherein the base of the outer shell (3) is welded to the base of the bracket body (A1, A2, A3) and the press-fit hole (11) is not welded to the outer shell.

## Patentansprüche

1. Gelenkstütze mit:
einem Stützkörper (A1, A2, A3) für die Aufnahme eines äußeren Mantels (3) eines Stoßdämpfers, wobei ein Loch (11) mit Preßpassung und festem Durchmesser für die Preßpassung eines unteren Teiles des äußeren Mantels in einem oberen Ende des Stützkörpers gebildet ist; und
einem Paar von Halteteilen (10), um ein Gelenk einer Radnabe dazwischen zu halten, wobei die Halteteile seitlich von dem Stützkörper vorstehen und gegenüberliegende Montagelöcher (12, 13) haben;
dadurch gekennzeichnet, daß:
der Stützkörper (A1, A2, A3) einen horizontalen Träger (7) und ein Paar von gekrümmten Umfassungsteilen (9) aufweist, die gebogen sind, um von gegenüberliegenden Enden des Trägers nach unten vorzuspringen;
die Halteteile (10) von Seiten der Umfassungsteile (9) vorspringen; und
das Loch (11) mit Preßpassung koaxial zum Krümmungsmittelpunkt der inneren Umfänge der Umfassungsteile (9) ist und in einem Mittelteil des Trägers (7) gebildet ist.

2. Gelenkstütze nach Anspruch 1, wobei eine rohrförmige Führung (15, 16) sich von dem Loch (11) mit Preßpassung erstreckt und von einer oberen oder unteren Oberfläche des Stützkörpers (A2, A3) vorspringt.

3. Gelenkstütze nach Anspruch 2, wobei die rohrförmige Führung (15, 16) eine nach oben oder nach unten gebogene Lippe des Loches (11) mit Preßpassung aufweist.

4. Gelenkstütze in Kombination mit einem Stoßdämpfer, wobei die Gelenkstütze einem der Ansprüche 1 bis 3 entspricht und der Stoßdämpfer einen Außenmantel (3) hat, dessen unterer Teil in dem Loch (11) mit Preßpassung des Stützkörpers (A1, A2, A3) mit Preßpassung angebracht ist.

5. Gelenkstütze und Stoßdämpfer in Kombination, nach Anspruch 4, wobei die Basis des äußeren Mantels (3) an der Basis des Stützkörpers (A1, A2, A3) angeschweißt ist und das Loch (11) mit Preßpassung nicht an dem äußeren Mantel angeschweißt wird.

## Revendications

1. Bride de fixation comprenant :
un corps de bride (A1, A2, A3) pour recevoir une coque externe (3) d'un amortisseur, dans lequel un trou de diamètre fixe d'ajustage serré (11) pour l'ajustage serré en son sein d'une portion inférieure de la coque externe est formé dans une extrémité supérieure du corps de bride ; et
une paire de portions d'attache (10) pour attacher entre elles une fixation d'un moyeu de roue, les portions d'attache se projetant latéralement depuis le corps de bride et comportant des trous de montage opposés (12, 13) ;
caractérisée en ce que :
le corps de bride (A1, A2, A3) comprend un support horizontal (7) et une paire de portions d'enveloppement courbes (9) coudées de manière à se projeter vers le bas depuis des extrémités opposées du support ;
les portions d'attache (10) se projettent depuis des côtés des portions d'enveloppement (9) ; et
le trou d'ajustage serré (11) est coaxial avec le centre de courbure des périphéries internes des portions d'enveloppement (9) et est formé dans une portion centrale du support (7).

2. Bride de fixation selon la revendication 1, dans laquelle un guide tubulaire (15, 16) prolonge le trou d'ajustage serré (11) et se projette depuis une face supérieure ou inférieure du corps de bride (A2, A3).

3. Bride de fixation selon la revendication 2, dans laquelle le guide tubulaire (15, 16) comprend une bordure coudée vers le haut ou vers le bas du trou d'ajustage serré (11) .

4. Bride de fixation combinée avec un amortisseur, dans laquelle la bride de fixation est selon l'une quelconque des revendications 1 à 3 et l'amortisseur comporte une coque externe (3) dont une portion inférieure est ajustée serrée dans le trou d'ajustage serré (11) du corps de bride (A1, A2, A3).

5. Combinaison de la bride de fixation et l'amortisseur de la revendication 4, dans laquelle la base de la coque externe (3) est soudée à la base du corps de bride (A1, A2, A3) et le trou d'ajustage serré (11) n'est pas soudé à la coque externe.
